# EUROPÄISCHE PATENTSCHRIFT

(11) **EP 3 096 997 B1**
(45) Veröffentlichungstag und Bekanntmachung des Hinweises auf die Patenterteilung: **20.02.2019**
(21) Anmeldenummer: 14824374.4
(22) Anmeldetag: 17.12.2014
(51) Int. Cl.: B62D 13/06, B62D 15/02, G05D 1/00, B60W 30/06, G05D 1/02, G06K 9/00, G08G 1/16, H04M 1/725, G06F 3/0484

(54) **VERFAHREN UND VORRICHTUNG ZUR STEUERUNG EINES GESPANNS IN EINEN PARKRAUM**
METHOD AND DEVICE FOR STEERING A CAR/TRAILER COMBINATION INTO A PARKING SPACE
PROCÉDÉ ET DISPOSITIF DE COMMANDE D'UN ATTELAGE DANS UN ESPACE DE STATIONNEMENT

(30) Priorität: 25.01.2014 DE 102014000978
(43) Veröffentlichungstag der Anmeldung: 30.11.2016
(73) Patentinhaber: Audi AG, 85045 Ingolstadt (DE)
(72) Erfinder: POPKEN, Markus, 85080 Gaimersheim (DE); GRAEFF, Michael, 85049 Ingolstadt (DE); LUEBCKE, Michael, 85080 Gaimersheim (DE)
(74) Vertreter: Bauer, Dominik Michael
(86) Internationale Anmeldenummer: PCT/EP2014/003400
(87) Internationale Veröffentlichungsnummer: WO 2015/110135

(56) Entgegenhaltungen:
- EP-A1- 2 011 701
- EP-A2- 2 607 210
- DE-A1-102005 043 466
- DE-A1-102007 032 720
- US-A1- 2005 000 738
- US-A1- 2007 198 190
- US-A1- 2011 001 825

## Beschreibung

Die vorliegende Erfindung betrifft ein Verfahren zur Steuerung eines Gespanns mit einem Fahrzeug und mindestens einem Anhänger, bei dem das Fahrzeug mittels einer mobilen Anzeigeeinheit von einem Nutzer gesteuert, d. h. ferngesteuert wird. Ferner betrifft die vorliegende Erfindung eine entsprechende Vorrichtung mit einer mobilen Anzeigeeinheit.

Beim Rangieren mit Gespannen kommt es insbesondere bei größeren Gespannen mit mehreren Anhängern häufig zu Unfällen, da eine Übersicht eines jeweiligen Fahrers über das gesamte Gespann oftmals eingeschränkt ist. Daher sind Vorrichtungen und Verfahren benötigt, die dem Fahrer eine bessere Übersicht über das Gespann und damit ein sicheres Steuern des Gespanns ermöglichen.

In der deutschen Druckschrift DE 10 2010 008 324 A1 wird eine Vorrichtung aus einer Kombination von einem Kraftfahrzeug und einem von dem Kraftfahrzeug unabhängigen mobilen Gerät mit einem Prozessor und einer Kamera beschrieben. Es ist vorgesehen, dass die Kamera vom Kraftfahrzeug aus auf einen am Kraftfahrzeug angehängten Anhänger gerichtet wird, so dass von der Kamera aufgenommene Bilder des Anhängers von dem Prozessor ausgewertet werden, um eine Lagebeziehung zwischen dem Kraftfahrzeug und dem Anhänger zu ermitteln.

Die Druckschrift DE 10 2005 045 196 A1 betrifft hingegen eine Vorrichtung zum Unterstützen des Fahrers eines Zugfahrzeugs beim Rückwärtsrangieren mit einem Fahrzeuggespann, das folgende Komponenten umfasst: eine im Heckbereich des Fahrzeugs montierbare Kamera, einen Lenkwinkelgeber, einen Knickwinkelgeber, einen Simulationsrechner und eine Anzeigeeinrichtung. Die Vorrichtung dient einer Darstellung einer Trajektorie wenigstens eines Aufpunktes eines Anhängers des Fahrzeuggespanns, wobei die Trajektorie aus wenigstens einem Radeinschlagswinkel und/oder einem Knickwinkel berechnet und in ein Kamerabild eingeblendet wird.

In der Druckschrift DE 10 2006 056 408 A1 wird ein Verfahren zum Bestimmen einer Position eines zweiachsigen Anhängers mit zumindest einer beweglichen Radachse, relativ zu einem Fahrzeug offenbart. Das Verfahren umfasst folgende Schritte: Erzeugen von Bilddaten, Detektion von Messpunkten, Bestimmen einer Position eines jeden Messpunktes, Bestimmen eines Anordnungswinkels zwischen einer Fahrzeuglängsachse eines Zugfahrzeugs und einer Lenkachse des Anhängers und eines Anordnungswinkels zwischen der Lenkachse und einer Anhängerlängsachse des Anhängers anhand der Messpunkte gegenüber einer Bildaufnahmeeinrichtung.

Aus der EP 2 607 210 A2 ist ein Verfahren zur Steuerung eines Gespanns mit einem Fahrzeug und mindestens einem Anhänger bekannt, bei dem eine mobile Anzeigeeinheit zur Darstellung mindestens eines Teils des Gespanns und zur Kontrolle von Fahrfunktionen des Fahrzeugs verwendet wird. Die mobile Anzeigeeinheit ist über eine Drahtlosverbindung mit dem Fahrzeug verbunden und kann ein automatisches Einparkprogramm steuern. Der nächstliegende Stand der Technik ist in der EP 2 607 210 A2 zu sehen.

Die DE 10 2007 032720 A1 offenbart ein Verfahren zur Unterstützung des Fahrers eines Fahrzeugs beim Rangieren und/oder Einparken, bei dem eine momentane Ausgangsposition und eine zugehörige Fahrzeugumgebung erfasst werden, anhand derer eine Zielposition für das Fahrzeug bestimmt wird und dem Fahrer zur Bestätigung auf einer Anzeigevorrichtung angezeigt wird. Nach Bestätigung wird eine Simulation durchgeführt, um die optimale Bewegungsbahn zwischen Ausgangs- und Zielposition zu ermitteln.

Vor diesem Hintergrund wird ein Verfahren zur Steuerung eines Gespanns mit einem Fahrzeug und mindestens einem Anhänger vorgestellt, bei dem eine mobile Anzeigeeinheit zur Darstellung mindestens eines Teils des Gespanns verwendet wird, wobei die mobile Anzeigeeinheit mit dem Fahrzeug über eine Drahtlosverbindung in Kontakt steht und zur Kontrolle von Fahrfunktionen des Fahrzeugs verwendet wird, und wobei auf der mobilen Anzeigeeinheit zusätzlich mindestens eine Orientierungshilfe dargestellt wird und wobei der Nutzer einen Parkraum auswählen kann und das Gespann nach Zustimmung des Nutzers automatisch in den ausgewählten Parkraum einfährt, und wobei die mobile Anzeigeeinheit ein Smartphone ist.

Das erfindungsgemäße Verfahren ist dadurch gekennzeichnet, dass während einer Vorbeifahrt eine jeweilige Umgebung des Gespanns erfasst wird und jeweilige mögliche Parkräume für das Gespann auf der mobilen Anzeigeeinheit grafisch hervorgehoben werden, und dass in einem Fall aus der folgenden Liste an Fällen eine Schutzbremsung erfolgt: unklare Kommunikationslage, gefährliche Bedingungen, potentielle Kollision des Gespanns mit der Umgebung, Verbindungsabriss des Fahrzeugs zu der mobilen Anzeigeeinheit, unplausibles Sensorsignal, mindestens eine geometrische Angabe außerhalb eines regelbaren Bereichs und Ausbleiben eines Kontrollsignals der mobilen Anzeigeeinheit.

Um ein Gespann bei einem kritischen Fahrmanöver, wie bspw. einem Parkvorgang besser kontrollieren zu können als dies von einem Führerhaus aus möglich ist, sieht das erfindungsgemäße Verfahren eine mobile Anzeigeeinheit vor, mittels derer ein jeweiliger Fahrer eines Gespanns bzw. eines von dem Gespann umfassten Fahrzeugs, wie bspw. eines LKWs, das Gespann von außerhalb des Fahrzeugs und damit von einem Punkt aus, an dem eine Übersicht über kritische Stellen des Gespanns möglich ist, kontrollieren kann.

Zur Kontrolle des Gespanns mittels der mobilen Anzeigevorrichtung wird das Fahrzeug auf einen entsprechenden Kontrollmodus geschaltet, wodurch sich eine Fahrzeugsteuerungssoftware aktiviert, die alle notwendigen Steuerungselemente des Fahrzeugs in Abhängigkeit von Steuersignalen der mobilen Anzeigeeinheit betätigt.

Ist das Fahrzeug in den Kontrollmodus gewechselt, ist es dem jeweiligen Fahrer des Fahrzeugs möglich, das Fahrzeug zu verlassen und vom Führerhaus nicht einsehbare Bereiche abzuschreiten bzw. zu besichtigen. Parallel dazu kann der Fahrer das Fahrzeug über die mobile Anzeigeeinheit kontrollieren, so dass der Fahrer bspw. hinter dem Fahrzeug stehend oder von einer weiteren beliebigen Position aus das Fahrzeug kontrollieren kann.

Unter dem Begriff "Kontrollieren" ist im Rahmen der vorliegenden Offenbarung sowohl ein Betrachten und Prüfen eines aktuellen Szenarios, in welchem sich das Fahrzeug befindet, als auch ein Ansteuern, d. h. ein Fernansteuern des Fahrzeugs, wie bspw. ein Rangieren des Fahrzeugs und/oder des damit gekoppelten Anhängers und/oder des Gespanns zu verstehen.

Um dem Fahrer eine Navigation des Fahrzeugs in einer jeweiligen Umgebung zu erleichtern, ist vorgesehen, dass auf der mobilen Anzeigeeinheit eine Abbildung mindestens eines Teils des Gespanns dargestellt wird. Dabei wird in der Regel ein Teil des Fahrzeugs und eine zum Fahrzeug zeigende Deichsel des Anhängers zumindest ausschnittsweise, ggf. auch nur schematisch dargestellt. Die zur Erstellung der Abbildung verwendete Kamera oder sonstige Sensorik ist in der Regel am Fahrzeug, das den Anhänger zieht, d. h. am Zugfahrzeug angeordnet. Die Abbildung kann bspw. mittels einer Kamera oder über geeignete Sensoren, wie bspw. Radarsensoren, optische Sensoren oder jeden weiteren technisch geeigneten Typ von Sensoren erstellt werden. Die mittels der Sensoren erstellte Abbildung zeigt zum einen mindestens einen Teil des Gespanns und zum anderen mindestens eine Orientierungshilfe sowie ggf. mindestens einen Teil einer jeweiligen Umgebung des Gespanns.

Insbesondere in städtischen Gebieten können sich in einem Kamerabild viele ablenkende Elemente befinden, die eine Navigation bzw. Orientierung des Fahrers erschweren. Durch eine Einblendung von Orientierungshilfen und/oder Teilen einer jeweiligen Umgebung kann eine Navigation bspw. zum Parken eines Gespanns erheblich erleichtert werden.

Ferner ist vorgesehen, dass die vorliegende Erfindung insbesondere für eine Verwendung an einem PKW bzw. PKW-Gespann dient.

In einer weiteren möglichen Ausgestaltung des erfindungsgemäßen Verfahrens ist vorgesehen, dass die Umgebung und der mindestens eine Teil des Gespanns in mindestens einer Darstellungsart der folgenden Liste an Darstellungsarten auf der mobilen Anzeigeeinheit dargestellt werden: TopViewgrafik, BowlViewgrafik, 3D-Kameragrafik, Kameragrafik und eine Modellansicht.

Es ist denkbar, dass auf der mobilen Anzeigeeinheit eine abstrahierte, d. h. auf wesentliche Merkmale reduzierte Abbildung der Umgebung bzw. des Gespanns, bspw. in einer Modellansicht dargestellt wird. Vorteilhafte Darstellungsformen sind ferner 3D-Ansichten, in denen insbesondere räumliche Gefahren gut erkennbar sind sowie eine sogenannte "TopViewgrafik", in der ein Gespann von oben, d. h. in einer Draufsicht dargestellt wird. Eine "BowlViewgrafik" hingegen ermöglicht es, auch sehr lange Bereiche durch eine Krümmung der Darstellung auf einem Anzeigebereich darzustellen.

Unter einer Modellansicht ist im Kontext der vorliegenden Erfindung eine schematische Darstellung zu verstehen, bei der jeweilige darzustellende Elemente, d. h. sowohl mindestens ein Teil des Gespanns als auch eine jeweilige Umgebung bzw. Orientierungshilfen für eine gute Übersichtlichkeit reduziert, bspw. durch Linien und/oder Pfeile dargestellt werden.

Die jeweilige Darstellung kann entweder von dem jeweiligen Sensor selbst, einer von dem Sensor umfassten Recheneinheit, einer weiteren Recheneinheit oder der mobilen Anzeigeeinheit ausgeführt werden, so dass auch nicht abstrahierte Daten in eine abstrahierte Ansicht überführt werden können, in welcher der Fahrer eine verbesserte Übersicht bzw. Orientierung zur Navigation des Fahrzeugs bzw. Gespanns hat.

Eine weitere Möglichkeit zur Verbesserung einer Übersicht des Fahrers auf der mobilen Anzeigeeinheit bzw. zur Orientierung und Navigation in der jeweiligen Umgebung des Gespanns wird durch Orientierungshilfen in Form von geometrische Hilfestellungen und/oder Einblendungen, wie bspw. Hilfslinien, Hilfsflächen und/oder optischen Hervorhebungen, wie bspw. Abstandsbalken bereitgestellt. Durch bspw. eine Darstellung einer jeweiligen zu einem aktuellen Steuerbefehl passenden Trajektorie, d. h. einem zu erwartenden Bewegungsverlauf des Gespanns, kann der Fahrer abschätzen, ob das Gespann Gefahr läuft, mit der jeweiligen Umgebung zu kollidieren.

Ferner ist es dem Fahrer jederzeit möglich, eine Notbremsung einzuleiten, durch die das Gespann schnellstmöglich zum Stillstand gebracht wird. Die Notbremsung kann bspw. durch ein eigens dafür vorgesehenes Bedienelement oder einen Kontaktverlust zu einem Bedienerinterface der mobilen Anzeigeeinheit erfolgen. Kontaktverlust zu einem Bedieninterface der mobilen Anzeigeeinheit bedeutet, dass der Fahrer, der das Fahrzeug über das Bedieninterface der mobilen Anzeigeeinheit kontrollieren, d. h. ansteuern kann, willentlich oder versehentlich den Kontakt zum Bedienerinterface unterbricht, wodurch automatisch signalisiert wird, dass die Ansteuerung des Fahrzeugs beendet oder zumindest vorübergehend unterbrochen bzw. gestoppt ist.

Im erfindungsgemäßen Verfahren ist vorgesehen, dass die mobile Anzeigeeinheit ein Smartphone ist.

Ein Smartphone bietet alle notwendigen Voraussetzungen zur Verwendung als mobile Anzeigeeinheit für das erfindungsgemäße Verfahren. Neben einem Bedieninterface, wie bspw. einem Touchscreen, der gleichzeitig zur Anzeige der Sensordaten verwendet werden kann, wird durch ein Smartphone in der Regel auch ein leistungsstarker Prozessor zur Verarbeitung der Sensordaten sowie der Steuerbefehle des Nutzers zur Verfügung gestellt. Ferner bietet ein Smartphone Mittel zum Senden und Empfangen von Daten zur Kontrolle des Fahrzeugs, wie bspw. eine 3G, LTE, WLAN oder Bluetooth-Schnittstelle. Entsprechend ist es sinnvoll, das vorliegende Verfahren in einer Applikation zur Konfiguration eines Smartphones einem Fahrer zur Verfügung zu stellen.

Es ist selbstverständlich auch denkbar eine Vorrichtung zu verwenden, die den voranstehenden Eigenschaften eines Smartphones zumindest gleichwertig ist und die zur Ausführung des erfindungsgemäßen Verfahrens verwendet werden kann.

In einer weiteren möglichen Ausgestaltung des erfindungsgemäßen Verfahrens ist vorgesehen, dass die Orientierungshilfe mindestens eine geometrische Angabe bzgl. des Fahrzeugs und/oder des Anhängers aus der folgenden Liste an geometrischen Angaben bzgl. des Fahrzeugs und/oder des Anhängers umfasst: Ist-Winkel, d. h. ein aktueller Winkel einer Längsachse des Fahrzeugs und/oder des Anhängers, Soll-Winkel, d. h. ein Winkel der benötigt wird, um eine vorgegebene Bewegungsbahn abzufahren, Maximal-Winkel, d. h. ein größtmöglicher Lenkeinschlag des Fahrzeugs, aktueller Schwenkbereich, d. h. ein Bereich, der bei einem aktuellen Lenkeinschlag des Fahrzeugs von dem Fahrzeug überdeckt wird, aktueller Bremsweg bzw. Anhalteweg, aktuelle Radstellung, bspw. in [°], Knickwinkel, d. h. eine Differenz aus jeweiligen Ist-Winkeln von Fahrzeug und Anhänger, eine optische Achse einer Kamera, die bspw. fest in der Kamera eingezeichnet bzw. verbaut sei kann, ein Lot zur Orientierung gegenüber einem Bezugspunkt und einen aktuellen Wendekreis, den das Gespann bei einem aktuellen Lenkeinschlage benötigt sowie eine Trajektorie mindestens eines Aufpunktes des Anhängers. Dabei ist es denkbar, dass der Fahrer jeweilige geometrische Angaben und/oder eine Darstellung einer jeweiligen aktuellen Umgebung des Gespanns optional ein- und ausblenden kann.

In einer weiteren möglichen Ausgestaltung des erfindungsgemäßen Verfahrens ist vorgesehen, dass eine Aufnahme eines an dem Gespann angeordneten Sensors auf der Anzeigeeinheit dargestellt wird.

Eine Anordnung von Sensoren, insbesondere Kameras auf dem Gespann und insbesondere auf dem Fahrzeug bietet aufgrund einer erhöhten Position in der Regel eine gute Übersicht. Selbstverständlich sind auch weitere Positionen zur Anordnung jeweiliger Sensoren auf und unter dem Gespann sowie an dessen Seitenflächen denkbar.

In einer weiteren möglichen Ausgestaltung des erfindungsgemäßen Verfahrens ist vorgesehen, dass die mobile Anzeigeeinheit über eine Fahrzeugsteuerungssoftware mit dem Fahrzeug in Verbindung steht.

Während es einem Fahrer mittels des erfindungsgemäßen Verfahrens möglich ist, das Fahrzeug selbst, über bspw. einen Joystick, einen Touchscreen oder eine andere geeignete Eingabemethode zu steuern, d. h. zu fahren, ist es ebenfalls denkbar, dass das Fahrzeug bzw. das Gespann von einer Fahrzeugsteuerungssoftware automatisch gesteuert wird und der Fahrer lediglich eine Kontrollfunktion ausübt. Dabei kann die Fahrzeugsteuerungssoftware sowohl auf der mobilen Anzeigeeinheit als auch auf einer von dem jeweiligen Fahrzeug umfassten Recheneinheit ausgeführt werden. Die Fahrzeugsteuerungssoftware verbindet sich mit jeweiligen Aktuatoren und/oder Kontrollelementen und regelt entsprechende Systeme des Fahrzeugs bzw. des Gespanns derart, dass ein von dem Fahrer gewünschtes Fahrmanöver ausgeführt wird.

In einer weiteren möglichen Ausgestaltung des erfindungsgemäßen Verfahrens ist vorgesehen, dass von dem mindestens einen Teil des Gespanns überstrichene Flächen auf der mobilen Anzeigeeinheit grafisch hervorgehoben werden. Um einen Rangierbereich des Gespanns besser abschätzen zu können, ist es vorteilhaft, wenn von dem Gespann aktuell in der jeweiligen Umgebung überstrichene Flächen bspw. durch Anfärben auf der mobilen Anzeigeeinheit grafisch hervorgehoben werden.

In einer weiteren möglichen Ausgestaltung des erfindungsgemäßen Verfahrens ist vorgesehen, dass bei einer Fortsetzung einer aktuellen Trajektorie des Gespanns durch das Gespann zu überstreichende Flächen auf der mobilen Anzeigeeinheit grafisch hervorgehoben werden.

Um einen Rangierbereich des Gespanns besser abschätzen zu können, ist es weiterhin vorteilhaft, wenn von dem Gespann in Zukunft, d. h. bei einer Beibehaltung von aktuellen Steuersignalen in der jeweiligen Umgebung zu überstreichende Flächen bspw. durch Anfärben grafisch hervorgehoben werden.

In einer weiteren möglichen Ausgestaltung des erfindungsgemäßen Verfahrens ist vorgesehen, dass eine Trajektorie von einem Nutzer mittels der mobilen Anzeigeeinheit ausgewählt und die Trajektorie automatisch, nach Zustimmung des Nutzers, von dem Gespann abgefahren wird.

Mittels der Fahrzeugsteuerungssoftware in Verbindung mit der mobilen Anzeigeeinheit kann von dem Fahrer eine jeweilige Trajektorie erstellt, auf ihre Gefahren bzw. ihren Rangierweg hin beurteilt und schließlich automatisch ausgeführt werden. Der Fahrer hat dabei eine überwachende Funktion und kann ggf. außerhalb des Fahrzeugs beurteilen, inwieweit ein aktuelles Fahrmanöver zulässig ist oder das Fahrmanöver durch Einleiten einer Notbremsung beenden.

Im erfindungsgemäßen Verfahren ist vorgesehen, dass während einer Vorbeifahrt des Gespanns an einer jeweiligen Umgebung, die jeweilige Umgebung des Gespanns erfasst wird und jeweilige mögliche Parkräume für das Gespann auf der mobilen Anzeigeeinheit grafisch hervorgehoben werden, wobei der Nutzer einen jeweiligen Parkraum auswählen kann und das Gespann nach Zustimmung des Nutzers automatisch in den ausgewählten Parkraum einfährt.

Da ein Fahrzeug in der Regel zunächst an einem Parkraum vorbeifährt, bevor es in diesen einfährt, kann die Vorbeifahrt dazu genutzt werden, den Parkraum durch geeignete Sensoren zu erfassen und auf diese Weise gesammelte Sensordaten für eine Darstellung des Parkraums und/oder zur Durchführung des erfindungsgemäßen Verfahrens zu verwenden. Ist ein jeweiliger Parkraum erfasst, kann der Fahrer diesen auf der mobilen Anzeigeeinheit beurteilen und ggf. einen Parkvorgang, d. h. ein automatisches Fahrmanöver zum Befahren des Parkraums einleiten. Der Fahrer kann sich dabei bspw. außerhalb des Fahrzeugs an einer Position mit einer guten Übersicht des Parkraums befinden.

Im erfindungsgemäßen Verfahren ist vorgesehen, dass in einem Fall aus der folgenden Liste an Fällen eine Schutzbremsung erfolgt: unklare Kommunikationslage, gefährliche Bedingungen, potentielle Kollision des Gespanns mit der Umgebung, Verbindungsabriss des Fahrzeugs zu der mobilen Anzeigeeinheit, unplausibles Sensorsignal, mindestens eine geometrische Angabe außerhalb eines regelbaren Bereichs und Ausbleiben eines Kontrollsignals der mobilen Anzeigeeinheit.

Insbesondere bei automatischen Fahrmanövern ist ein sicheres Betreiben eines jeweiligen Fahrzeugs nur dann gegeben, wenn ein jeweiliger Fahrer die ausgeführten Fahrmanöver beaufsichtigt, d. h. kontrolliert. Zu diesem Zweck ist vorgesehen, dass in Fällen, in denen eine Kontrolle des Fahrers eingeschränkt und/oder zweifelhaft ist, eine Notbremsung durchgeführt wird, die das Fahrzeug bzw. das Gespann schnellstmöglich zum Stillstand bringt.

Ferner umfasst die vorliegende Erfindung eine Vorrichtung zur Steuerung eines Gespanns, das ein Fahrzeug und mindestens einen Anhänger umfasst, mit einer mobilen Anzeigeeinheit, die dazu konfiguriert ist, das Gespann über eine Drahtlosverbindung derart anzusteuern, dass das Gespann sich gemäß mittels der mobilen Anzeigeeinheit bereitzustellenden Anweisungen bewegt und wobei die mobile Anzeigeeinheit weiterhin dazu konfiguriert ist, eine Grafik mindestens eines Teils des Gespanns sowie mindestens eine Orientierungshilfe zur Navigation in einer jeweiligen Umgebung einem Nutzer auf der mobilen Anzeigeeinheit anzuzeigen, und wobei die mobile Anzeigeeinheit weiterhin derart konfiguriert ist, dass ein auf der mobilen Anzeigeeinheit darzustellender Parkraum in einer Umgebung des Gespanns von einem Nutzer in einer auf der mobilen Anzeigeeinheit darzustellenden Ansicht auszuwählen ist und das Fahrzeug bei Auswahl durch den Nutzer automatisch in den Parkraum einfährt, , und wobei die mobile Anzeigeeinheit ein Smartphone ist.

Die erfindungsgemäße Vorrichtung ist dadurch gekennzeichnet, dass während einer Vorbeifahrt eine jeweilige Umgebung des Gespanns erfasst wird und jeweilige mögliche Parkräume für das Gespann auf der mobilen Anzeigeeinheit grafisch hervorgehoben werden, und dass in einem Fall aus der folgenden Liste an Fällen eine Schutzbremsung erfolgt: unklare Kommunikationslage, gefährliche Bedingungen, potentielle Kollision des Gespanns mit der Umgebung, Verbindungsabriss des Fahrzeugs zu der mobilen Anzeigeeinheit, unplausibles Sensorsignal, mindestens eine geometrische Angabe außerhalb eines regelbaren Bereichs und Ausbleiben eines Kontrollsignals der mobilen Anzeigeeinheit.

Bei der erfindungsgemäßen Vorrichtung werden Steuersignale durch einen Nutzer, d. h. einen Fahrer eines jeweiligen Fahrzeugs bzw. Gespanns auf einer mobilen Anzeigeeinheit erzeugt und diese über eine Sende- / Empfängereinheit an das Fahrzeug bzw. eine von dem Fahrzeug umfasste Sende- / Empfängereinheit weitergeleitet. Die Steuersignale können von einer Fahrzeugsteuerungssoftware, die sowohl auf der mobilen Anzeigeeinheit als auch auf einer von dem Fahrzeug umfassten Recheneinheit implementiert sein kann, analysiert und zur automatischen Steuerung des Fahrzeugs verwendet werden. Dabei werden von jeweiligen von dem Fahrzeug bzw. Gespann umfassten Sensoren ermittelte Sensordaten an die mobile Anzeigeeinheit übermittelt bzw. auf der mobilen Anzeigeeinheit dargestellt. Bei der Darstellung der Sensordaten ist es ferner möglich, Orientierungshilfen, die entweder ermittelt, d. h. berechnet oder gemessen, oder fest vorgegeben sein können, in die Darstellung einzublenden, so dass dem Fahrer eine Orientierung innerhalb der Darstellung erleichtert wird.

Vorteilhafterweise werden dem Fahrer zur Orientierung jeweilige mögliche, d. h. zu einer Stellung des Fahrzeugs bzw. Gespanns passende Trajektorien bzw. Bewegungsverläufe dargestellt, zwischen denen der Fahrer sich entscheiden kann.

In der erfindungsgemäßen Vorrichtung ist vorgesehen, dass die mobile Anzeigeeinheit derart konfiguriert ist, dass der auf der mobilen Anzeigeeinheit darzustellende Parkraum von einem Nutzer in einer jeweiligen auf der mobilen Anzeigeeinheit darzustellenden Umgebung auszuwählen ist und das Fahrzeug bei Auswahl durch den Nutzer automatisch in den Parkraum einfährt.

Es ist denkbar, dass der Nutzer der mobilen Anzeigeeinheit bzw. Fahrer des Fahrzeugs bzw. Gespanns einen auf der mobilen Anzeigeeinheit dargestellten Parkraum über ein Bedieninterface, wie bspw. einen Touchscreen auswählt, indem bspw. die Darstellung des Gespanns auf die Darstellung des Parkraums gezogen wird, woraufhin das Fahrzeug bzw. Gespann automatisch, d. h. unter Verwendung der Fahrzeugsteuerungssoftware sowie ggf. vorhandener Sensoren in den ausgewählten Parkraum einfährt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine mögliche Darstellung auf einer Ausführungsform der erfindungsgemäßen mobilen Anzeigeeinheit, wobei als mobile Anzeigeeinheit ein Smartphone gewählt ist.
Figur 2 zeigt eine schematische Darstellung einer möglichen Ausführungsform einer Verbindung zwischen der mobilen Anzeigeeinheit aus Figur 1 und einem Fahrzeug.
Figur 3 zeigt eine schematische Darstellung einer möglichen Ausführungsform einer Anzeige auf der mobilen Anzeigeeinheit.

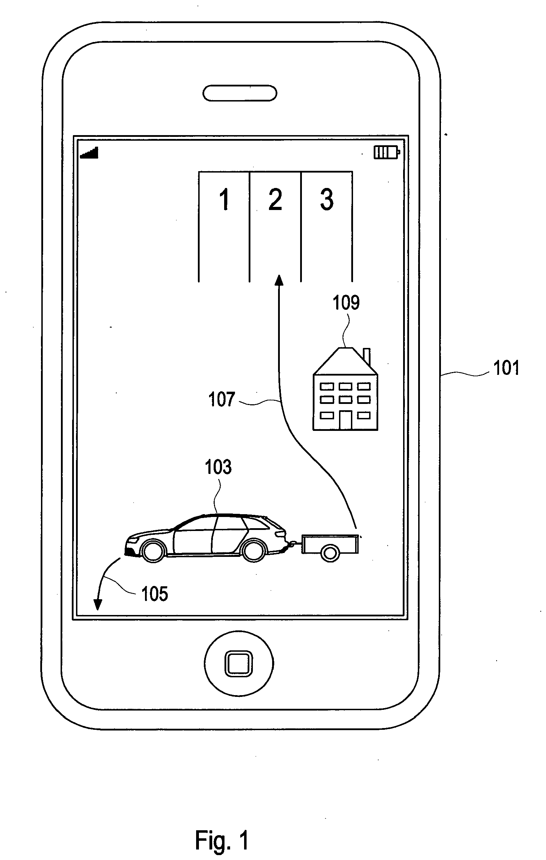

Die in Figur 1 auf einer mobilen Anzeigeeinheit 101 gezeigte Darstellung umfasst ein Gespann, das in einen Parkraum 2 einfahren soll. Dazu wählt ein jeweiliger Fahrer des Gespanns 103 den Parkraum 2 auf der mobilen Anzeigeeinheit 101 mittels einer Berührung auf einer entsprechenden Stelle auf der mobilen Anzeigeeinheit 101 aus. Sodann wird dem Fahrer eine mögliche Trajektorie vorgeschlagen, die zu einer Einfahrt des Gespanns 103 in den Parkraum 2 führt, wie durch die Pfeile 105 und 107 verdeutlicht. Aufgrund einer vorangegangenen Vorbeifahrt an einem potentiellen Hindernis 109 in Form eines Hauses, das bei der Vorbeifahrt von Sensoren des Gespanns 103 erfasst wurde, wird dem Fahrer eine Trajektorie vorgeschlagen, die an dem Haus 109 in sicherer Entfernung vorbeiführt.

Zur Ausführung des Einfahrens in den Parkraum 2 gemäß der vorgeschlagenen Trajektorie bestätigt der Fahrer die Trajektorie durch Verschieben der Darstellung des Gespanns 103 in den Parkraum 2 per drag and drop, woraufhin das Gespann 103 automatisch in den Parkraum 2 einfährt. Während der gesamten Fahrt des Gespanns 103 behält der Fahrer mindestens einen Finger auf der mobilen Anzeigeeinheit 101 bzw. auf einem von der mobilen Anzeigeeinheit 101 umfassten Touchscreen, wodurch diese darüber informiert wird, dass der Fahrer aktiv seine Kontrollaufgabe wahrnimmt. Sobald der Fahrer seinen Finger von dem Touchscreen löst, führt das Gespann 103 eine Notbremsung durch, die zu einem schnellstmöglichen Halt des Gespanns 103 führt.

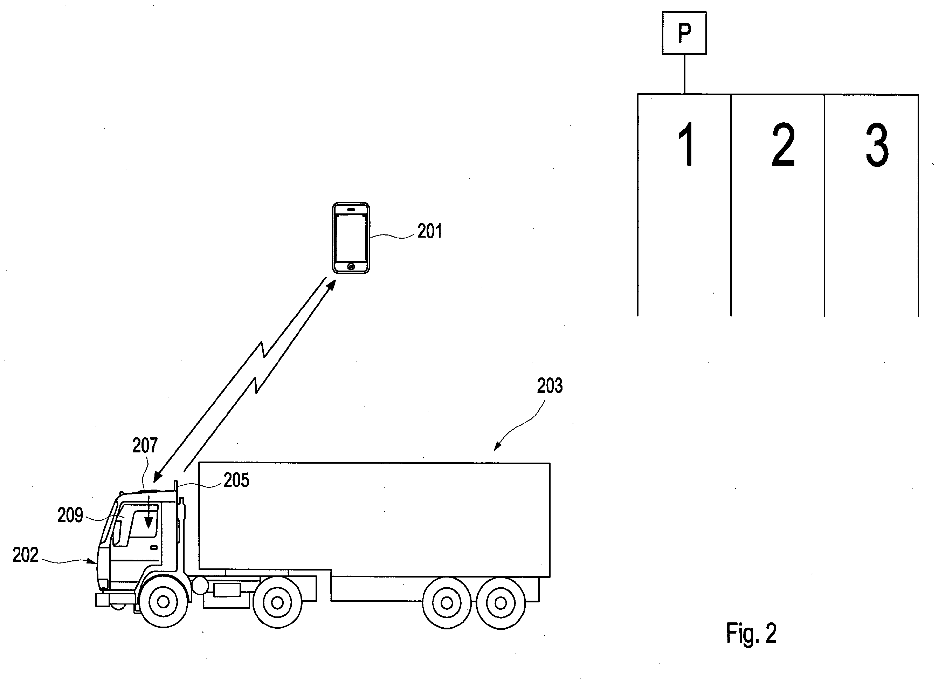

Die in Figur 2 dargestellte Anordnung umfasst ein Gespann 203, das mit einem Smartphone 201 in Verbindung steht, wobei das Smartphone 201 wiederum seinerseits mit einer von einem Fahrzeug 202 des Gespanns 203 umfassten Kamera 205 in Verbindung steht. Um das Gespann 203 in einen Parkraum 2 zu steuern, bedient ein jeweiliger Fahrer des Gespanns 203 das Smartphone 201 von außerhalb des Gespanns 203, um einen Überblick über die jeweilige Umgebung zu wahren und eine potentielle Kollision des Gespanns 203 mit Gegenständen oder Personen, die sich in einem nur bedingt oder gar nicht aus einem Führerhaus 209 einsehbaren Bereich befinden könnten, zu vermeiden. Dazu werden in das Smartphone 201 eingegebene Befehle an eine von dem Fahrzeug 209 umfasste Empfangseinheit 207 gesendet und von der Empfangseinheit 207 an eine Fahrzeugsteuerungssoftware zur Steuerung des Fahrzeugs 202 übermittelt.

Dazu wird dem Fahrer eine modellierte Ansicht des Gespanns 203 auf dem Smartphone 201 angezeigt. Über einen von dem Smartphone 203 umfassten Touchscreen zieht der Fahrer - langsam und vorsichtig - die modellierte Ansicht des Gespanns auf dem Smartphone 201 in eine Darstellung des Parkraums 2. Parallel dazu setzt sich das Gespann 203 in Bewegung, wobei sich das Gespann 203 relativ zu der Darstellung des Gespanns auf dem Smartphone verhält, d. h. das Gespann 203 stoppt, wenn der Fahrer seinen Finger anhält und die Darstellung des Gespanns ebenfalls stoppt. Umgekehrt setzt sich das Gespann 203 in Bewegung, wenn der Fahrer seinen Finger bewegt und die Darstellung des Gespanns in der virtuellen Umgebung bewegt. Durch stetes Bewegen des Fahrers um das Gespann 203 herum ist es dem Fahrer möglich, alle potentiellen Gefahrenebereiche abzuschreiten während sich das Gespann 203 bewegt. Auf diese Weise ist es dem Fahrer möglich, auch schwer einsehbare Bereiche oder gefährliche Bereiche, wie bspw. auf einem Schulgelände, sicher und eigenständig zu befahren.

Ferner ist für den Fall, dass das Fahrzeug 202 beim Rückwärtsrangieren starke Lenkbewegungen ausführt und der Fahrer sich schräg hinter dem Gespann 203 befindet und ein ggf. auftretendes Auffahren des Fahrzeugs 202 auf ein Hindernis nicht sieht, vorgesehen, dass eine ggf. auf dem Smartphone 201 dargestellte und/oder von dem Fahrzeug 202 ausgeführte Trajektorie sich aktiv, d. h. automatisch ändert. Dadurch wird das Hindernis automatisch umfahren und eine Kollision mit dem Fahrzeug 202 vermieden. Nach erfolgreichem Umfahren wird die ursprüngliche Trajektorie wieder aufgenommen.

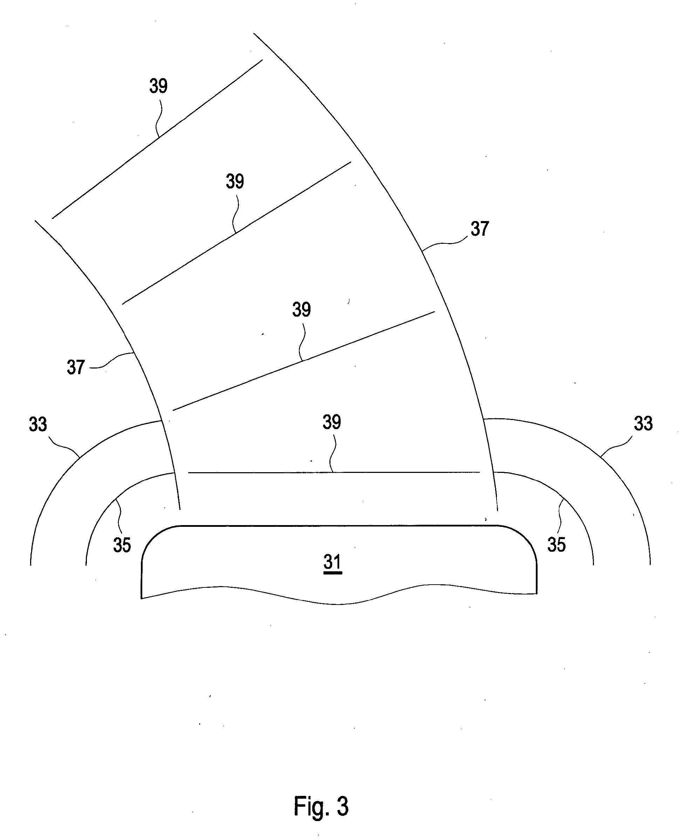

Die in Figur 3 dargestellte Ansicht zeigt eine Ansicht zur Navigation bzw. Steuerung eines Fahrzeugs. Gezeigt ist eine rückwärtige Perspektive aus einer Heckscheibe des Fahrzeugs. Eine Kofferraumkante 31 bildet einen Fahrzeugabschluss, der von farblich verschiedenen Zonen 33, 35 umrandet wird, so dass im Falle eines Überlappens einer der Zonen 33 und/oder 35 mit einem potentiell kollidierenden Umgebungsbestandteil eine Warnung, bspw. in Form eines Blinkens auf der mobilen Anzeigeeinheit ausgegeben wird.

Weiterhin werden auf der mobilen Anzeigeeinheit Orientierungshilfen 37 und 39 dargestellt, die über eine von einem Kamerasensor bereitgestellte Aufnahme einer jeweiligen Umgebung überlagert dargestellt werden. Die gekrümmten Orientierungshilfen 37 zeigen einen bei einem aktuellen Lenkwinkel zu erwartenden Bewegungsverlauf von äußeren Grenzen des Fahrzeugs bzw. Gespanns. Die Orientierungshilfen 39 hingegen sind zur Beurteilung einer zurückzulegenden Distanz geeignet und können als Bezugsgröße zur Beurteilung einer Größe eines in der Umgebung befindlichen Objekts oder einer Fläche, wie bspw. eines Parkraums verwendet werden.

Unter Verwendung der mobilen Anzeigeeinheit ist es einem Nutzer möglich, einen Bewegungsverlauf des jeweiligen Fahrzeugs bzw. Gespanns vorauszuahnen und auf ggf. auftretende Gefahren, sowohl durch die in Figur 3 dargestellte Ansicht als auch durch eigenständiges Abschreiten und Beschauen der jeweiligen Umgebung frühzeitig zu reagieren.

## Patentansprüche

1. Verfahren zur Steuerung eines Gespanns mit einem Fahrzeug und mindestens einem Anhänger, bei dem eine mobile Anzeigeeinheit zur Darstellung mindestens eines Teils des Gespanns verwendet wird und wobei die mobile Anzeigeeinheit mit dem Fahrzeug über eine Drahtlosverbindung in Kontakt steht und zur Kontrolle von Fahrfunktionen des Fahrzeugs verwendet wird, und wobei auf der mobilen Anzeigeeinheit zusätzlich mindestens eine Orientierungshilfe dargestellt wird und wobei der Nutzer einen Parkraum auswählen kann und das Gespann nach Zustimmung des Nutzers automatisch in den ausgewählten Parkraum einfährt, und wobei die mobile Anzeigeeinheit ein Smartphone ist, **dadurch gekennzeichnet, dass** während einer Vorbeifahrt eine jeweilige Umgebung des Gespanns erfasst wird und jeweilige mögliche Parkräume für das Gespann auf der mobilen Anzeigeeinheit grafisch hervorgehoben werden, und dass in einem Fall aus der folgenden Liste an Fällen eine Schutzbremsung erfolgt: unklare Kommunikationslage, gefährliche Bedingungen, potentielle Kollision des Gespanns mit der Umgebung, Verbindungsabriss des Fahrzeugs zu der mobilen Anzeigeeinheit, unplausibles Sensorsignal, mindestens eine geometrische Angabe außerhalb eines regelbaren Bereichs und Ausbleiben eines Kontrollsignals der mobilen Anzeigeeinheit.

2. Verfahren nach Anspruch 1, bei dem auf der mobilen Anzeigeeinheit mindestens ein Teil einer Umgebung des Gespanns zusammen mit der mindestens einen Orientierungshilfe für eine Navigation des Gespanns in der Umgebung dargestellt werden.

3. Verfahren nach einem der voranstehenden Ansprüche, bei dem die mindestens eine Orientierungshilfe mindestens eine geometrische Angabe aus der folgenden Liste an geometrischen Angaben umfasst: Ist-Winkel des Fahrzeugs und des Anhängers, Soll-Winkel des Fahrzeugs und des Anhängers, Maximal-Winkel des Fahrzeugs, aktueller Schwenkbereich des Gespanns, aktueller Bremsweg des Gespanns, Radstellung des Fahrzeugs, Knickwinkel, eine optische Achse einer Kamera, ein Lot und ein aktueller Wendekreis des Gespanns sowie eine Trajektorie mindestens eines Aufpunktes des Anhängers.

4. Verfahren nach einem der voranstehenden Ansprüche, bei dem eine Aufnahme eines an dem Gespann angeordneten Sensors auf der mobilen Anzeigeeinheit dargestellt wird.

5. Verfahren nach einem der voranstehenden Ansprüche, bei dem die mobile Anzeigeeinheit über eine Fahrzeugsteuerungssoftware mit dem Fahrzeug in Verbindung steht.

6. Verfahren nach einem der voranstehenden Ansprüche, bei dem die Umgebung und der mindestens eine Teil des Gespanns in mindestens einer Darstellungsart der folgenden Liste an Darstellungsarten auf der mobilen Anzeigeeinheit dargestellt werden: TopViewgrafik, BowlViewgrafik, 3D-Kameragrafik, Kameragrafik und Modellansicht.

7. Verfahren nach Anspruch 6, bei dem von dem mindestens einen Teil des Gespanns überstrichene Flächen auf der mobilen Anzeigeeinheit grafisch hervorgehoben werden.

8. Verfahren nach Anspruch 6 oder 7, bei dem bei einer Fortsetzung einer aktuellen Trajektorie des Gespanns durch das Gespann zu überstreichende Flächen auf der mobilen Anzeigeeinheit grafisch hervorgehoben werden.

9. Verfahren nach einem der voranstehenden Ansprüche, bei dem eine Trajektorie von einem Nutzer mittels der mobilen Anzeigeeinheit ausgewählt und die Trajektorie automatisch nach Zustimmung des Nutzers von dem Gespann abgefahren wird.

10. Vorrichtung zur Steuerung eines Gespanns mit einer mobilen Anzeigeeinheit, wobei die mobile Anzeigeeinheit dazu konfiguriert ist, das Gespann über eine Drahtlosverbindung derart anzusteuern, dass das Gespann sich gemäß mittels der mobilen Anzeigeeinheit bereitzustellenden Anweisungen bewegt und wobei die mobile Anzeigeeinheit weiterhin dazu konfiguriert ist, eine Grafik mindestens eines Teils des Gespanns sowie mindestens eine Orientierungshilfe zur Navigation in einer jeweiligen Umgebung einem Nutzer auf der mobilen Anzeigeeinheit anzuzeigen, und wobei die mobile Anzeigeeinheit weiterhin derart konfiguriert ist, dass ein auf der mobilen Anzeigeeinheit darzustellender Parkraum in einer Umgebung des Gespanns von einem Nutzer in einer auf der mobilen Anzeigeeinheit darzustellenden Ansicht auszuwählen ist und das Fahrzeug bei Auswahl durch den Nutzer automatisch in den Parkraum einfährt, und wobei die mobile Anzeigeeinheit ein Smartphone ist, **dadurch gekennzeichnet, dass** während einer Vorbeifahrt eine jeweilige Umgebung des Gespanns erfasst wird und jeweilige mögliche Parkräume für das Gespann auf der mobilen Anzeigeeinheit grafisch hervorgehoben werden, und dass in einem Fall aus der folgenden Liste an Fällen eine Schutzbremsung erfolgt: unklare Kommunikationslage, gefährliche Bedingungen, potentielle Kollision des Gespanns mit der Umgebung, Verbindungsabriss des Fahrzeugs zu der mobilen Anzeigeeinheit, unplausibles Sensorsignal, mindestens eine geometrische Angabe außerhalb eines regelbaren Bereichs und Ausbleiben eines Kontrollsignals der mobilen Anzeigeeinheit.

## Claims

1. Method for steering a rig having a vehicle and at least one trailer, in which a mobile display unit is used for showing at least one part of the rig and wherein the mobile display unit is in contact with the vehicle via a wireless connection and is used for control of drive functions of the vehicle, and wherein on the mobile display unit additionally at least one orientation aid is displayed and wherein the user can select a parking space and the rig drives, after agreement of the user, automatically into the selected parking space, and wherein the mobile display unit is a smart phone, **characterised in that** during a passing by a respective environment of the rig is detected and respective possible parking spaces for the rig are graphically highlighted on the mobile display unit, and that in a situation from the following list of situations a protective braking follows: unclear communication status, dangerous conditions, potential collision of the rig with the environment, breakdown in connection of the vehicle to the mobile display unit, implausible sensor signal, at least one geometrical specification outside a range which can be regulated and failure of a control signal from the mobile display unit.

2. Method according to claim 1, in which on the mobile display unit is shown at least one part of an environment of the rig together with the at least one orientation aid for a navigation of the rig in the environment.

3. Method according to any of the preceding claims, in which the at least one orientation aid comprises at least one geometrical specification from the following list of geometrical specifications: actual angle of the vehicle and the trailer, target angle of the vehicle and the trailer, maximum angle of the vehicle, current pivotal area of the rig, current braking path of the rig, wheel position of the vehicle, articulation angle, an optical axis of the camera, a perpendicular and a current turning circle of the rig and a trajectory of at least one reference point of the trailer.

4. Method according to any of the preceding claims, in which a photograph from a sensor disposed on the rig is shown on the mobile display unit.

5. Method according to any of the preceding claims, in which the mobile display unit is in connection with the vehicle via a vehicle control software.

6. Method according to any of the preceding claims, in which the environment and the at least one part of the rig is shown on the mobile display unit in at least one display type from the following list of display types: top view graphics, bowl view graphics, 3D camera graphics, camera graphics and model view.

7. Method according to claim 6, in which surfaces to be passed over by the at least one part of the rig are graphically highlighted on the mobile display unit.

8. Method according to claim 6 or 7, in which in the case of a continuation of a current trajectory of the rig, surfaces to be passed over by the rig are graphically highlighted on the mobile display unit.

9. Method according to any of the preceding claims, in which a trajectory is selected by a user by means of the mobile display unit and the trajectory is automatically travelled by the rig after agreement of the user.

10. Device for the control of a rig with a mobile display unit, wherein the mobile display unit is configured to control the rig via a wireless connection in such a manner that the rig moves in accordance with commands to be provided by means of the mobile display unit and wherein the mobile display unit is furthermore configured to display on the mobile display unit for a user a graphic of at least one part of the rig and at least one orientation aid for the navigation in a respective environment, and wherein the mobile display unit is furthermore configured such that a parking space to be displayed on the mobile display unit is to be selected in an environment of the rig by a user in a view to be displayed on the mobile display unit and the vehicle travels automatically into the parking space when the selection has been carried out by the user, and wherein the mobile display unit is a smart phone, **characterised in that** during a passing by a respective environment of the rig is detected and respective possible parking spaces for the rig are graphically highlighted on the mobile display unit, and that in a situation from the following list of situations a protective braking follows: unclear communication status, dangerous conditions, potential collision of the rig with the environment, breakdown in connection of the vehicle to the mobile display unit, implausible sensor signal, at least one geometrical specification outside a range which can be regulated and failure of a control signal from the mobile display unit.

## Revendications

1. Procédé de commande d'un attelage avec un véhicule et au moins une remorque, dans lequel une unité d'affichage mobile est utilisée pour la représentation d'au moins une partie de l'attelage et dans lequel l'unité d'affichage mobile est en contact avec le véhicule par le biais d'une liaison sans fil et est utilisée pour le contrôle de fonctions de conduite du véhicule, et dans lequel au moins une aide à l'orientation est représentée en plus sur l'unité d'affichage mobile et dans lequel l'utilisateur peut sélectionner un espace de stationnement et l'attelage entre automatiquement dans l'espace de stationnement sélectionné après acceptation de l'utilisateur, et dans lequel l'unité d'affichage mobile est un smartphone, **caractérisé en ce que** pendant un passage, un environnement respectif de l'attelage est détecté et des espaces de stationnement possibles respectifs pour l'attelage sont mis en évidence de façon graphique sur l'unité d'affichage mobile, et **en ce que** dans un cas de la liste de cas suivante un freinage de protection a lieu : état de communication non clair, conditions dangereuses, collision potentielle de l'attelage avec l'environnement, coupure de liaison du véhicule avec l'unité d'affichage mobile, signal de capteur non plausible, au moins une donnée géométrique en dehors d'une plage réglable et absence d'un signal de contrôle de l'unité d'affichage mobile.

2. Procédé selon la revendication 1, dans lequel au moins une partie d'un environnement de l'attelage conjointement avec l'au moins une aide à l'orientation pour une navigation de l'attelage dans l'environnement sont représentées sur l'unité d'affichage mobile.

3. Procédé selon l'une quelconque des revendications précédentes, dans lequel l'au moins une aide à l'orientation comprend au moins une donnée géométrique de la liste suivante de données géométriques : angle réel du véhicule et de la remorque, angle de consigne du véhicule et de la remorque, angle maximum du véhicule, plage de pivotement actuel de l'attelage, distance de freinage actuelle de l'attelage, position des roues du véhicule, angle d'articulation, un axe optique d'une caméra, un fil à plomb et un rayon de braquage actuel de l'attelage ainsi qu'une trajectoire d'au moins un point d'impact de la remorque.

4. Procédé selon l'une quelconque des revendications précédentes, dans lequel un enregistrement d'un capteur agencé au niveau de l'attelage est représenté sur l'unité d'affichage mobile.

5. Procédé selon l'une quelconque des revendications précédentes, dans lequel l'unité d'affichage mobile est en liaison avec le véhicule par le biais d'un logiciel de commande de véhicule.

6. Procédé selon l'une quelconque des revendications précédentes, dans lequel l'environnement et l'au moins une partie de l'attelage sont représentés dans au moins un type de représentation de la liste suivante de types de représentation sur l'unité d'affichage mobile : graphique TopView, graphique BowlView, graphique caméra 3D, graphique caméra et vue modèle.

7. Procédé selon la revendication 6, dans lequel des surfaces balayées par l'au moins une partie de l'attelage sont mises en évidence de façon graphique sur l'unité d'affichage mobile.

8. Procédé selon la revendication 6 ou 7, dans lequel dans le cas d'un prolongement d'une trajectoire actuelle de l'attelage, des surfaces à balayer par l'attelage sont mises en évidence de façon graphique sur l'unité d'affichage mobile.

9. Procédé selon l'une quelconque des revendications précédentes, dans lequel une trajectoire est sélectionnée par un utilisateur au moyen de l'unité d'affichage mobile et la trajectoire est parcourue automatiquement par l'attelage après acceptation de l'utilisateur.

10. Dispositif de commande d'un attelage avec une unité d'affichage mobile, dans lequel l'unité d'affichage mobile est configurée pour commander l'attelage par le biais d'une liaison sans fil de telle sorte que l'attelage se déplace conformément à des instructions à mettre à disposition au moyen de l'unité d'affichage mobile et dans lequel l'unité d'affichage mobile est en outre configurée pour afficher à un utilisateur sur l'unité d'affichage mobile un graphique d'au moins une partie de l'attelage ainsi qu'au moins une aide à l'orientation pour la navigation dans un environnement respectif, et dans lequel l'unité d'affichage mobile est en outre configurée de sorte qu'un espace de stationnement à représenter sur l'unité d'affichage mobile dans un environnement de l'attelage doit être sélectionné par un utilisateur dans une vue à représenter sur l'unité d'affichage mobile et le véhicule entre automatiquement dans l'espace de stationnement lors de la sélection par l'utilisateur, et dans lequel l'unité d'affichage mobile est un smartphone, **caractérisé en ce que** pendant un passage, un environnement respectif de l'attelage est détecté et des espaces de stationnement possibles respectifs pour l'attelage sont mis en évidence de façon graphique sur l'unité d'affichage mobile, et **en ce que** dans un cas de la liste de cas suivante un freinage de protection a lieu : état de communication non clair, conditions dangereuses, collision potentielle de l'attelage avec l'environnement, coupure de liaison du véhicule avec l'unité d'affichage mobile, signal de capteur non plausible, au moins une donnée géométrique en dehors d'une plage réglable et absence d'un signal de contrôle de l'unité d'affichage mobile.
